# EUROPEAN PATENT SPECIFICATION

(11) **EP 2 159 114 B1**
(45) Date of publication and mention of the grant of the patent: **01.02.2012**
(21) Application number: 08162958.6
(22) Date of filing: 26.08.2008
(51) Int. Cl.: B60S 1/34

(54) **A windscreen wiper device**
Scheibenwischvorrichtung
Dispositif d'essuie-glace

(43) Date of publication of application: 03.03.2010
(73) Proprietor: Federal-Mogul S.A., 6790 Aubange (BE)
(72) Inventor: Boland, Xavier, 6700 Arlon (BE)
(74) Representative: Hooiveld, Arjen Jan Winfried

(56) References cited:
- WO-A-03/099620
- WO-A-2008/040373
- WO-A1-2005/097567
- DE-A1-102004 017 447
- JP-A- 3 281 463
- US-A- 5 327 614

## Description

The present invention relates to a windscreen wiper device, particularly for automobiles, comprising an elongated wiper blade of a flexible material, which can be placed in abutment with a windscreen to be wiped, said wiper blade comprising a connecting device for an oscillating arm, wherein said oscillating arm near one end thereof is pivotally connected to said wiper blade and near the other end thereof is connected to a mounting head on a drive shaft for transferring a reciprocal movement to said wiper blade, wherein said windscreen wiper device further comprises a cap detachably connected to said mounting head at the location where said oscillating arm is connected to said mounting head , wherein said cap is snapped onto an outer wall of said mounting head in axial direction thereof, and wherein said cap comprises protrusions extending inwardly from an inner wall of said cap, which protrusions cooperate in engaging relationship with stop surfaces on said outer wall of said mounting head.

Such a windscreen wiper device and cap are known from German patent publication no. 10 2004 017 447 (Volkswagen AG). However, in practice it has been apparent that such a cap easily can get loose from the mounting head, for example during washing of the automobile in a car wash.

It is the object of the invention to improve the prior art, particularly to provide a windscreen wiper device, wherein the cap and the mounting head are interconnected in a simple, through durable and solid, though detachable manner.

In order to accomplish that objective a windscreen wiper device of the type mentioned in the preamble is characterized according to the invention in that said protrusions and said stop surfaces at the location of their contact surfaces are provided with mutually cooperating tooth/recess means. Particularly, said protrusions are each provided with at least one upwardly extending tooth engaging into a correspondingly shaped recess in each stop surface. In another preferred embodiment said stop surfaces are each provided with at least one downwardly extending tooth engaging into a correspondingly shaped recess in each protrusion. Said protrusions on the inner wall of said cap may be located opposite one another and/or may be distributed angularly along a periphery of said inner wall and/or may be part of a continuous inner edge or rim on said inner wall.

International patent publication no. W02008/040373 (Valeo) discloses a device for fastening a wiper functional unit to a wiper shaft, wherein a clamping piece is clamped onto a drive shaft using a tensioning element and wherein said tensioning element comprises locking projections engaging clamping arms of said clamping piece.

It is noted that the present invention is not restricted to the use in automobiles, but can also be used in other fast vehicles, such as railway coaches.

Further it is noted that the present invention can be used in so-called "flat blades", but also in traditional blades having yokes. In the latter case, the connecting device may be formed by a main yoke.

In a preferred embodiment of a windscreen wiper device in accordance with the invention the tooth comprises a slide in-slope and a slide out-slope, and wherein the angle of inclination of the slide in-slope is smaller than the angle of inclination of the slide out-slope. In this respect a slide in-slope corresponds to a part of the tooth that is first slid inside said recess, whereas a slide-out slope corresponds to a part of the tooth that is first slid outside said recess. Hence, it will be easy, that is it will takes less force to mount said cap onto said mounting head, whereas it will be difficult (i.e. it will take considerable force) to dismount said cap.

In another preferred embodiment of a windscreen wiper device according to the invention an angle between said contact surfaces and the horizontal varies between 10° and 40°, preferably between 20° and 30°. Accordingly, said cap is safely clipped onto said mounting head.

In another preferred embodiment of a windscreen wiper device in accordance with the invention at least two teeth are provided on each protrusion and/or stop surface, wherein the length of the inner tooth is larger than the length of the outer tooth. Again, this would simply interconnecting said cap and said mounting head, while the risk of losing said cap is avoided.

In another preferred embodiment of a windscreen wiper device according to the invention said inner wall and is in one piece with an outer wall of said cap.

The invention will now be explained in more detail with reference to figures illustrated in a drawing, wherein:

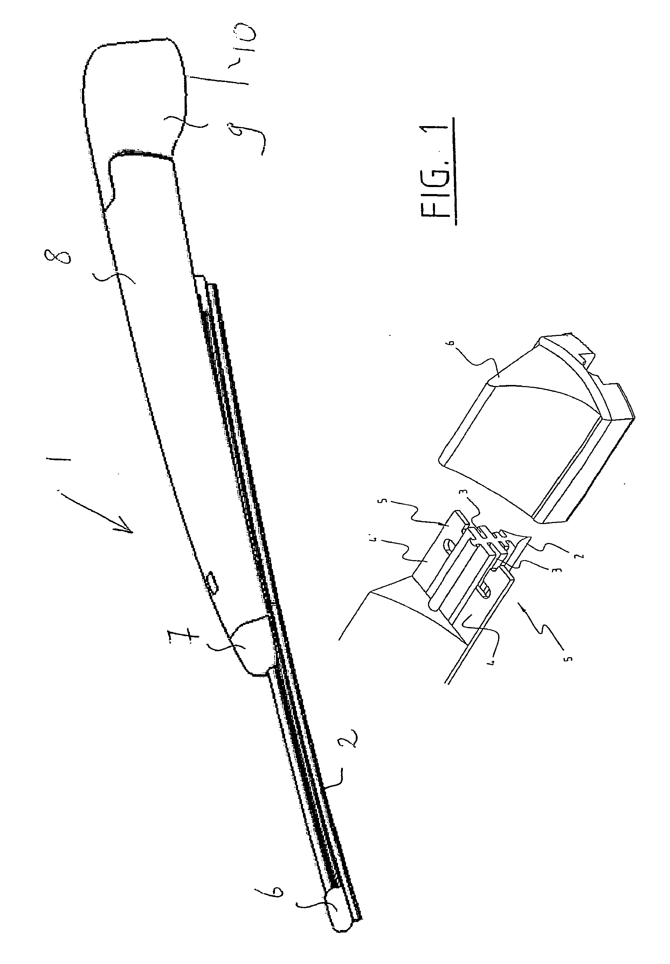

- Figure 1 is a perspective and schematic view of a preferred embodiment of a windscreen wiper device in accordance with the invention;
- Figure 2 shows a schematic view of a cap and mounting head as used in figure 1, seen in cross-section; and
- Figure 3 shows a detail of figure 2.

The windscreen wiper device 1 is a so-called "flat blade" and is built up of an elastomeric wiper blade 2, in the longitudinal sides of which opposing longitudinal grooves 3 are formed, and of longitudinal strips 4 made of spring band steel, which are fitted in said longitudinal grooves 3. Said strips 4 form a flexible carrier element for the wiper blade 2, as it were, which is thus biased in a curved position (the curvature in operative position being that of a windscreen to be wiped).

Neighboring ends 5 of the strips 4 at one end of said wiper blade 2 are interconnected by means of a connecting piece 6 or "end cap" functioning as clamping member. In this embodiment, the connecting piece 6 is a separate constructional element, which may be form-locked ("positive locking" or "having a positive fit") or force-locked to the ends 5 of the strips 4. In another preferred embodiment, said connecting piece 6 is in one piece with the strips 4 made of spring band steel. In the latter case said connecting piece 6 forms a transverse bridge for the strips 4, as it were.

The windscreen wiper device 1 is furthermore built up of a connecting device 7 of plastic material for an oscillating 8. Alternatively, the connecting device 7 may also be made of metal, such as steel or aluminum. The connecting device 7 may comprise clamping members that are integral therewith, which engage around longitudinal sides of the strips 4 that face away from each other, as a result of which the connecting device 7 is firmly attached to the unit consisting of the wiper blade 2 and the strips 4. The oscillating arm is pivotally connected to said wiper blade 2.

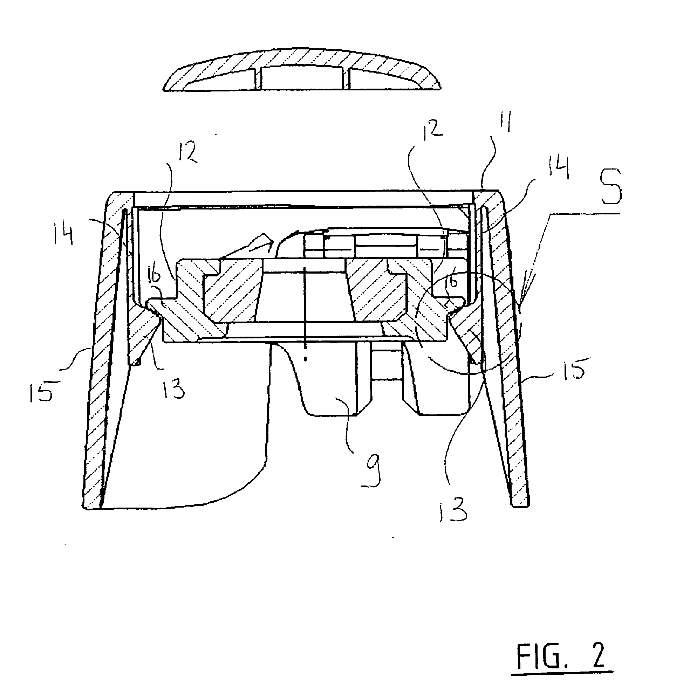

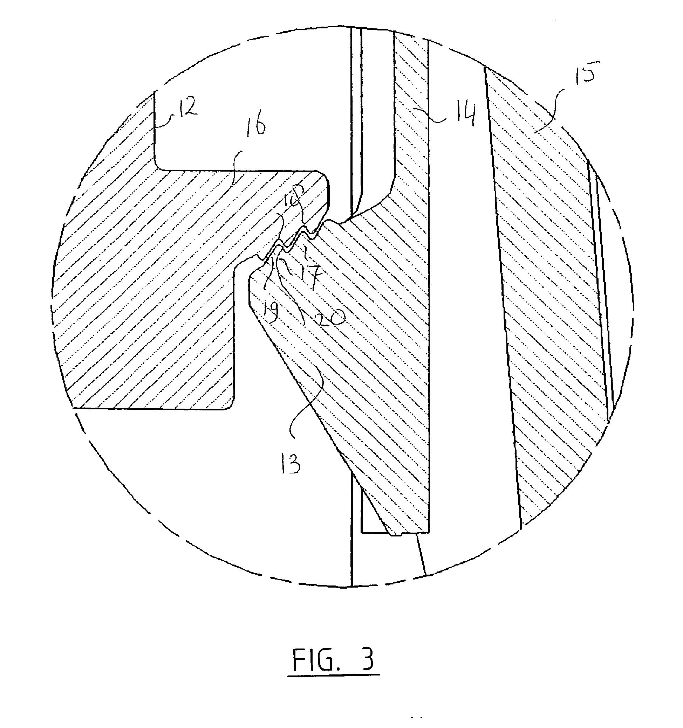

As illustrated in figures 2 and 3, the windscreen wiper device 1 according to the invention comprises a plastic or metallic mounting head 9 which can be fixed for rotation to a shaft 10 driven, via a mechanism not illustrated, by a small motor. In use, the shaft 10 rotates alternately in a clockwise and in a counter-clockwise sense carrying the mounting head 9 into rotation also, which in turn draws the oscillating arm 8 in rotation and thereby moves the wiper blade 2.

The windscreen wiper device 1 further comprises a plastic or metallic cap or cover 11 being detachably connected to said mounting head 9 at the location where said oscillating arm 8 is connected to said mounting head 9. Said cap 11 is snapped onto an outer wall 12 of said mounting head 9 in axial direction thereof. More in particular, said cap 11 comprises opposite protrusions 13 extending inwardly from an inner wall (14) of said cap 11 being integral with an outer wall 15 of said cap 11. By pressing said cap 11 in vertical direction onto said mounting head 9, said inner and outer walls 14, 15 are first pressed outwardly under the influence of stop surfaces 16 on said outer wall 12 of said mounting head 9, that is in outward direction, until said inner and outer walls 14, 15 are subsequently allowed to spring back against a spring force, thus snapping or clipping said cap 11 onto said mounting head 9. Said protrusions 13 are then hooked, i.e. clamped behind said stop surfaces 16 on said outer wall 12 of said mounting head 9.

As can be seen from figure 3, the contact surfaces of said protrusions 13 on said inner wall 14 and said stop surfaces 16 on said outer wall 12 of said mounting head 9 are equipped with mutually cooperating tooth/recess means. More in particular, said protrusions 13 are each provided with a plurality of upwardly extending teeth 17 engaging into correspondingly shaped recesses 18 in each stop surface 16. Each tooth 17 comprises a slide in-slope 19 and a slide out-slope 20, wherein the angle of inclination of the slide in-slope 19 is smaller than the angle of inclination of the slide out-slope 20. An angle between said contact surfaces and the horizontal varies between 20° and 30°.

The invention is not restricted to the embodiment shown, but extends also to other preferred embodiments falling within the scope of the appended claims. For example, a skilled person will appreciate that the use of said cap 11 is not restricted to so-called "flat blades", but also extends to traditional blades having yokes. The connecting device 7 may then be formed by a main yoke to be connected to said oscillating arm 8.

## Claims

1. A windscreen wiper device (1), particularly for automobiles, comprising an elongated wiper blade (2) of a flexible material, which can be placed in abutment with a windscreen to be wiped, said wiper blade (2) comprising a connecting device (7) for an oscillating arm (8), wherein said oscillating arm (8) near one end thereof is pivotally connected to said wiper blade (2) and near the other end thereof is connected to a mounting head (9) on a drive shaft (10) for transferring a reciprocal movement to said wiper blade (2), wherein said windscreen wiper device (1) further comprises a cap (11) detachably connected to said mounting head (9) at the location where said oscillating arm (8) is connected to said mounting head (9), wherein said cap (11) is snapped onto an outer wall (12) of said mounting head (9) in axial direction thereof, and wherein said cap (11) comprises protrusions (13) extending inwardly from an inner wall (14) of said cap (11), which protrusions (13) cooperate in engaging relationship with stop surfaces (16) on said outer wall (12) of said mounting head (9), **characterized in that** said protrusions (13 )and said stop surfaces (16) at the location of their contact surfaces are provided with mutually cooperating tooth/recess means.

2. A windscreen wiper device (1) according to claim 1,
wherein said protrusions (13) are each provided with at least one upwardly extending tooth (17) engaging into a correspondingly shaped recess (18) in each stop surface (16).

3. A windscreen wiper device (1) according to claim 1 or 2, wherein said stop surfaces (16) are each provided with at least one downwardly extending tooth (17) engaging into a correspondingly shaped recess (18) in each protrusion (13).

4. A windscreen wiper device (1) according to claim 2 or 3, wherein the tooth (17) comprises a slide in-slope (19) and a slide out-slope (20), and wherein the angle of inclination of the slide in-slope (19) is smaller than the angle of inclination of the slide out-slope (20).

5. A windscreen wiper device (1) according to claim 2, 3 or 4, wherein an angle between said contact surfaces and the horizontal varies between 10° and 40°, preferably between 20° and 30°.

6. A windscreen wiper device (1) according to any of the preceding claims 2 through 5, wherein at least two teeth (17) are provided on each protrusion (13)/stop surface (16), and wherein the length of the inner tooth (17) is larger than the length of the outer tooth (17).

7. A windscreen wiper device (1) according to any of the preceding claims 1 through 6, wherein said inner wall (14) is in one piece with an outer wall (15) of said cap (11).

## Patentansprüche

1. Scheibenwischervorrichtung (1), insbesondere für Automobile, umfassend ein längliches Wischerblatt (2) aus einem flexiblen Material, das an einer zu wischenden Windschutzscheibe anliegend platziert werden kann,
wobei das Wischerblatt (2) eine Verbindungsvorrichtung (7) für einen oszillierenden Arm (8) umfasst, wobei der oszillierende Arm (8) nahe einem Ende davon schwenkbar mit dem Wischerblatt (2) verbunden ist und nahe dem anderen Ende davon mit einem Befestigungskopf (9) an einer Antriebswelle (10) verbunden ist, um eine Hin- und Herbewegung auf das Wischerblatt (2) zu übertragen,
wobei die Scheibenwischervorrichtung (1) weiter eine Kappe (11) umfasst, die an der Stelle, an der der oszillierende Arm (8) mit dem Befestigungskopf (9) verbunden ist, abnehmbar mit dem Befestigungskopf (9) verbunden ist;
wobei die Kappe (11) auf eine äußere Wand (12) des Befestigungskopfs (9) in axialer Richtung davon klemmend aufgesteckt ist, und
wobei die Kappe (11) Vorsprünge (13) umfasst, die sich von einer inneren Wand (14) der Kappe (11) nach innen erstrecken, wobei die Vorsprünge (13) mit Halteflächen (16) auf der äußeren Wand (12) des Befestigungskopfes (9) in eingreifender Weise zusammenwirken,
**dadurch gekennzeichnet, dass**
die Vorsprünge (13) und ihre Halteflächen (16) an der Stelle ihrer Kontaktflächen mit gegenseitig zusammenwirkenden Zahn-/Vertiefungsmitteln versehen sind.

2. Scheibenwischervorrichtung (1) nach Anspruch 1, wobei die Vorsprünge (13) jeweils mit mindestens einem sich nach oben erstreckenden Zahn (17) versehen sind, der in eine entsprechend geformte Vertiefung (18) in jeder Haltefläche (16) eingreift.

3. Scheibenwischervorrichtung (1) nach Anspruch 1 oder 2, wobei die Halteflächen (16) jeweils mit mindesten einem sich nach unten erstreckenden Zahn (17) versehen sind, der in eine entsprechend geformte Vertiefung (18) in jedem Vorsprung (13) eingreift.

4. Scheibenwischervorrichtung (1) nach Anspruch 2 oder 3, wobei der Zahn (17) eine Einführungsschräge (19) und eine Ausziehschräge (20) umfasst, und wobei der Neigungswinkel der Einführungsschräge (19) kleiner als der Neigungswinkel der Ausziehschräge (20) ist.

5. Scheibenwischervorrichtung (1) nach Anspruch 2, 3 oder 4, wobei ein Winkel zwischen den Kontaktflächen und der Horizontalen zwischen 10° und 40°, bevorzugt zwischen 20° und 30° beträgt.

6. Scheibenwischervorrichtung (1) nach einem der vorstehenden Ansprüche 2 bis 5, wobei mindestens zwei Zähne (17) auf jedem Vorsprung (13) / jeder Haltefläche (16) bereitgestellt sind, und wobei die Länge des inneren Zahns (17) größer als die Länge des äußeren Zahns (17) ist.

7. Scheibenwischervorrichtung (1) nach einem der vorstehenden Ansprüche 1 bis 6, wobei die innere Wand (14) einstückig mit einer äußeren Wand (15) der Kappe (11) ist.

## Revendications

1. Dispositif d'essuie-glace (1), destiné en particulier à des automobiles, qui comprend un balai d'essuie-glace (2) allongé réalisé dans un matériau flexible, qui peut être placé en butée contre un pare-brise à essuyer, ledit balai d'essuie-glace (2) comprenant un dispositif de connexion (7) destiné à un bras oscillant (8), dans lequel ledit bras oscillant (8) est connecté de manière pivotante, à proximité d'une extrémité de celui-ci, audit balai d'essuie-glace (2) et est connecté, à proximité de l'autre extrémité de celui-ci, à une tête de montage (9) sur un arbre d'entraînement (10) de façon à transférer un mouvement de va-et-vient audit balai d'essuie-glace (2), dans lequel ledit dispositif d'essuie-glace (1) comprend en outre un chapeau (11) connecté de manière amovible à ladite tête de montage (9) à l'endroit où ledit bras oscillant (8) est connecté à ladite tête de montage (9), dans lequel ledit chapeau (11) est encliqueté sur une paroi extérieure (12) de ladite tête de montage (9) dans la direction axiale de celle-ci, et dans lequel ledit chapeau (11) comprend des saillies (13) qui s'étendent vers l'intérieur à partir d'une paroi intérieure (14) dudit chapeau (11), lesquelles saillies (13) coopèrent dans une relation de mise en prise avec des surfaces d'arrêt (16) sur ladite paroi extérieure (12) de ladite tête de montage (9), **caractérisé en ce que** lesdites saillies (13) et lesdites surfaces d'arrêt (16) à l'endroit de leurs surfaces de contact sont dotées de moyens de dents /d'évidements qui coopèrent de manière mutuelle.

2. Dispositif d'essuie-glace (1) selon la revendication 1, dans lequel lesdites saillies (13) sont dotées chacune d'au moins une dent (17) qui s'étend vers le haut et qui vient en prise dans un évidement (18) qui présente une forme correspondante dans chaque surface d'arrêt (16).

3. Dispositif d'essuie-glace (1) selon la revendication 1, dans lequel lesdites surfaces d'arrêt (16) sont dotées chacune d'au moins une dent (17) qui s'étend vers le bas et qui vient en prise dans un évidement (18) qui présente une forme correspondante dans chaque saillies (13).

4. Dispositif d'essuie-glace (1) selon la revendication 2 ou la revendication 3, dans lequel la dent (17) comprend une pente de glissement d'entrée (19) et une pente de glissement de sortie (20), dans laquelle l'angle d'inclinaison de la pente de glissement d'entrée (19) est plus petit que l'angle d'inclinaison de la pente de glissement de sortie (20).

5. Dispositif d'essuie-glace (1) selon la revendication 2, la revendication 3 ou la revendication 4, dans lequel l'angle entre lesdites surfaces de contact et l'horizontale varie entre 10° et 40°, de préférence entre 20° et 30°.

6. Dispositif d'essuie-glace (1) selon l'une quelconque des revendications précédentes 2 à 5, dans lequel deux dents (17) au moins sont prévues sur chaque saillie (13) / surface d'arrêt (16), et dans lequel la longueur de la dent intérieure (17) est plus grande que la longueur de la dent extérieure (17).

7. Dispositif d'essuie-glace (1) selon l'une quelconque des revendications précédentes 1 à 6, dans lequel ladite paroi intérieure (14) est d'une seule pièce avec une paroi extérieure (15) dudit chapeau (11).
